(19) Europäisches Patentamt

European Patent Office

Office européen des brevets

(11) **EP 1 623 657 A1**

(12) **EUROPEAN PATENT APPLICATION**
published in accordance with Art. 158(3) EPC

(43) Date of publication:
**08.02.2006 Bulletin 2006/06**

(51) Int Cl.:
***A47G 1/00*** (1968.09)

(21) Application number: **04729270.1**

(22) Date of filing: **23.04.2004**

(86) International application number:
**PCT/JP2004/005925**

(87) International publication number:
**WO 2004/100731 (25.11.2004 Gazette 2004/48)**

(84) Designated Contracting States:
**AT BE BG CH CY CZ DE DK EE ES FI FR GB GR
HU IE IT LI LU MC NL PL PT RO SE SI SK TR**

(30) Priority: **14.05.2003 JP 2003135907**

(71) Applicant: **Murakami Corporation
Shizuoka-shi,
Shizuoka, 422-8569 (JP)**

(72) Inventors:
• **KIKUCHI, Hideyuki,
MURAKAMI CORPORATION
Fujieda-shi, Shizuoka 426-8601 (JP)**

• **MOCHIZUKA, Takuo,
MURAKAMI CORPORATION
yu, Fujieda-shi, Shizuoka 426-8601 (JP)**
• **KOBAYASHI, Masaki,
MURAKAMI CORPORATION
Fujieda-shi, Shizuoka 426-8601 (JP)**

(74) Representative: **Strehl Schübel-Hopf & Partner
Maximilianstrasse 54
80538 München (DE)**

(54) **ANTI-FOG MIRROR**

(57) The present invention provides an anti-fog mirror whose reflection color exhibit a neutral color tone (within colorless color tone region as a* value and b* value in L*a*b* colorimetric system diagram). The anti-fog mirror 1 has a substrate 5, a metal-made reflecting film 6 provided on the surface thereof, and a composite functional layer 7 having a photocatalytic functional layer 8 and a light-transmissive hydrophilic functional layer 9 provided on the metal-made reflecting layer 6. The thickness of the composite functional layer 7 is set so that a* value and b* value in L*a*b* colorimetric system diagram are ranging from 20 to -20, respectively.

FIG. 1

EP 1 623 657 A1

**Description**

BACKGROUND OF THE INVENTION

FIELD OF THE INVENTION

The present invention relates to an anti-fog mirror, and particularly to an anti-fog mirror whose reflection color exhibit a neutral color tone.

DESCRIPTION OF THE RELATED ARTS

An anti-fog mirror is a mirror having a property that water droplet adhered on the surface of the mirror is removed. The conventional anti-fog mirror is roughly classified into two types; one in which water repellant treatment is subjected onto the surface of the mirror for enhancing water repellency whereby the water droplet adhered is converted into a hemispheric form, and then removed; and the other in which hydrophilic treatment is subjected onto the surface of the mirror for enhancing water wettability, whereby the water droplet adhered thereon is spread as a thin film state, which is then removed. On the surface of the former anti-fog mirror having water repellant treatment subjected thereon, the water adhered on the surface becomes a water droplet in a hemisphere state (hemisphere having a small curvature), and a rear side image is vertically reversed due to a lens effect. Consequently, a bright image such as sky and a streetlight appears on a lower half portion of the water droplet, enhancing indistinctness.

For this reason, recently, an anti-fog mirror having hydrophilic treatment subjected on the surface of the mirror has became popular. An example of such an anti-fog mirror includes an anti-fog mirror having a transparent photocatalytic substance film on which a photocatalytic reaction is brought about, and a transparent porous inorganic oxide film on the surface of a transparent member as suggested by us in Japanese Patent Laid-Open No. 10-36144.

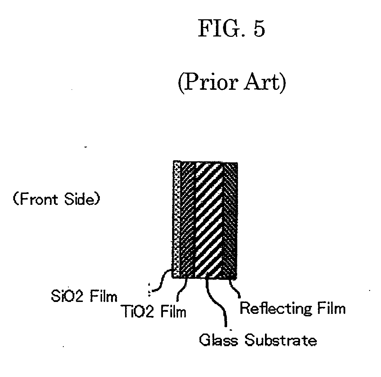

As shown in FIG. 5, the conventional anti-fog mirror is composed of a transparent glass substrate on which a $TiO_2$ film, which is a photocatalytic substance, and an $SiO_2$ film, which is a porous inorganic oxide film stacked on the front surface of the, substrate on this order, and having a metal-made reflecting film such as Cr or Al formed on the rear surface thereof.

According to this anti-fog mirror, the water adhered on the surface of the porous $SiO_2$ film enhances its wettability on the surface by a capillary phenomenon at an opening (not shown) of the porous $SiO_2$ film and, thus, the hydrophilicity is enhanced to obtain an anti-fog function. Consequently, when the anti-fog mirror is applied to an automobile exterior mirror, a bathroom mirror, an automobile window, a windowpane or such, it becomes difficult to adhere the water droplet onto the surface of the mirror in a hemisphere state, making a visibility good.

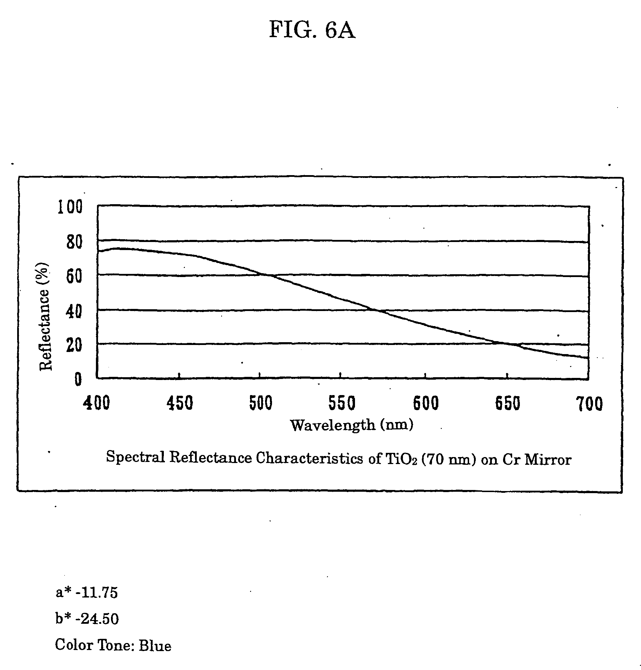

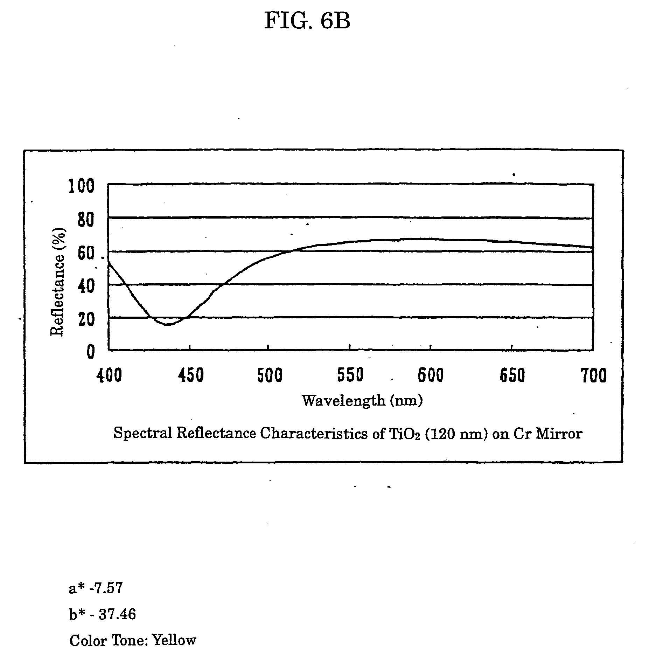

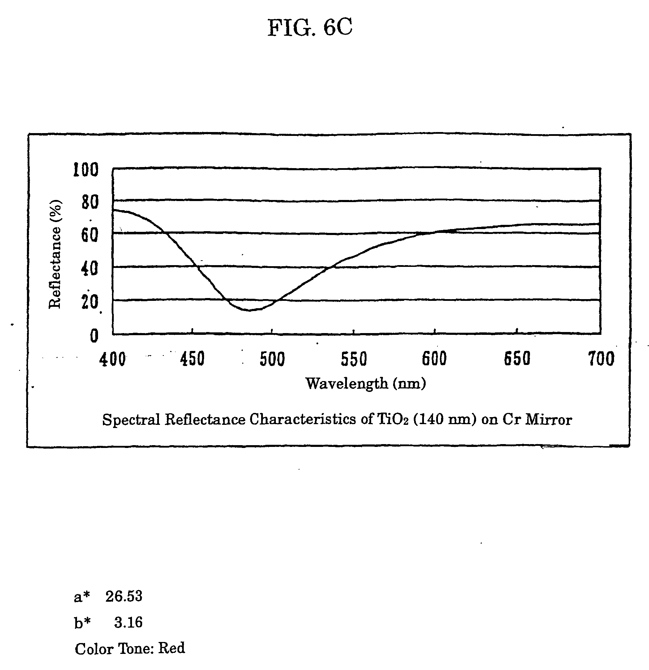

When the $TiO_2$ film, which is a photocatalytic substance, is formed on the metal-made reflecting film such as a Cr film, the anti-fog mirror as described above exhibits various reflection color, depending upon the thickness of the $TiO_2$ film. FIG. 6A, FIG. 6B, and FIG. 6C are graphs each showing spectra reflectance characteristics possessed by a $TiO_2$ film, each having different film thickness, together with an a* value and a b* value in L*a*b* colorimetric system diagram, which show color tones (blue, yellow, and red). Amongst them the anti-fog mirror exhibiting a blue color tone as shown in FIG. 6A also possesses an anti-glare property, and is suitable for an automobile exterior mirror.

An anti-glare mirror has been suggested in Japanese Patent Laid-Open No. 2000-318581, in which a photocatalytic film and a hydrophilic film are formed on the glass substrate on this order so as to exhibit an effect for decreasing surface reflectance of a light having a wavelength region of from approximately 550 nm to 580 nm, and film thicknesses are set so that the color of the light reflected at the surface becomes white, to thereby exhibit an effect that their after-images are difficult to remain even if one views an image formed by the surface reflected light and an image formed by the light reflected from the metal-made film which is interfered with the surface reflected light.

On the other hand, recently, there are increasing needs for the anti-fog mirror in fields of "medical mirrors" represented by dental mirror for confirmation internal situations of a mouth and "cosmetic mirrors" which are provided on a washstand or a dresser. In the application of the anti-fog mirror to the medical mirror or cosmetic mirror, it is desired to make up the anti-fog mirror whose reflection color is colorless so that various substances can be watched as their plain colors.

However, there is no disclosure or no teaching for a technique in which the reflection color reaches a neutral color tone (little reflection color/capable of suppressing reflection color), i.e., a technique which realizes color tune near colorless taking an a* value and a b* value in an L*a*b* colorimetric system diagram as indexes, or a technique in which the reflection color becomes colorless, i.e., a technique for realizing colorless in color tone taking an a* value and a b* value in an L*a*b* colorimetric system diagram as indexes in the conventional anti-fog mirror.

An object of the present invention is, therefore, to provide an anti-fog mirror whose reflection color is near a neutral color tone (the reflection color within a color tone region near colorless as an a* value and a b* value in an L*a*b* colorimetric system diagram). Another object of the present invention is to provide an anti-fog mirror whose reflection color exhibit colorless (the reflection color within colorless color tone region as an a* value and a b* value in an L*a*b* colorimetric system diagram).

## SUMMARY OF THE INVENTION

We have conducted various examination for requirements that in the anti-fog mirror having the configuration described above, the reflection color has colorless color tone taking an a* value and a b* value in an L*a*b* colorimetric system diagram as indexes.

The term "the reflection color is colorless" intended herein means that the reflection light of the anti-fog mirror exhibits color within a colorless color tune region as an a* value and a b* value in an L*a*b* colorimetric system diagram (JIS Z8729), in other words, this term means that the spectral reflectance (relation between the reflectance and the wavelength of the reflection light) of the reflection light of the anti-fog mirror has no significant peak at a visible light region and the reflection light reproduces the color of the substance as it is.

The term "the reflection light exhibits a color tone near colorless" intended herein means that the reflection light of the anti-fog mirror exhibits color near a colorless color tune region as the a* value and the b* value in the L*a*b* colorimetric system diagram (JIS Z8729), in other words, this term means that the spectral reflectance (relation between the reflectance and the wavelength of the reflection light) of the reflection light of the anti-fog mirror has no significant peak at a visible light region and the reflection light substantially reproduces the color of the substance as it is.

Moreover, we have made serious studies and researches about parameters, which have influences upon the spectral reflectance of the reflection light of the anti-fog mirror, and as a result, we have clarified that the spectral reflectance greatly depends upon the film thicknesses of the hydrophilic functional layer and the photocatalytic functional layer, especially the film thickness of the photocatalytic functional layer, possessed by the anti-fog mirror. Furthermore, as a result of our serious studies and researches, we have found that based on this relation, when the film thickness of the photocatalytic functional layer is set so as to obtain an a* value and a b* value (or a c* value) in the L*a*b* colorimetric system diagram both ranging from 25 to -25, which is a region which makes the reflection light of the anti-fog mirror colorless, these object can be attained. The present invention has been accomplished based on this finding.

Specifically, there is provided an anti-fog mirror possessing a substrate having a metal-made reflecting layer, a composite functional layer with a photocatalytic function and a hydrophilic function provided on the surface of the substrate on this order, the film thickness of said composite functional layer being set so that an a* value and a b* value in an L*a*b* colorimetric system diagram are both ranging from 25 to -25 (a first embodiment).

The anti-fog mirror according to the present invention is an anti-fog mirror possessing a substrate having a metal-made reflecting layer, a composite functional layer with a photocatalytic function and a hydrophilic function provided on the surface of the substrate on this order, the film thickness of said composite functional layer being set so that a c* value in an L*a*b* colorimetric system diagram represented by the following formula (1):

$$Chroma(c*) = \sqrt{(a*)^2 + (b*)^2} \qquad (1)$$

is set to be not more than 35.

By such a configuration, even if water is adhered on the surface of the anti-fog mirror, since the water is spread over due to the hydrophilic function (hydrophilic functional layer) possessed by (contained in) the composite functional layer, the water is converted into a water droplet in a hemispheric shape only with difficulty. Also, due to the photocatalytic reaction of the photocatalytic substance (photocatalytic functional layer) contained in the composite functional layer, the hydrophilicity can be prevented from being decreased, making it possible to maintain an anti-fog property over prolong period of time. Furthermore, since both of the a* value and the b* value (or c* value) in the L*a*b* colorimetric system diagram are set so that a reflection light near a neutral color tone may be obtained or so that a reflection light , which is a neutral color tone, may be obtained, an anti-fog mirror whose reflection color is near a neutral color tone or whose reflection color is a neutral color tone can be realized.

For the purpose that the reflection color much more approaches a neutral color tone (for the purpose of suppressing the reflection color), the film thickness of the composite functional layer is preferably set so that the a* value and the b* value in the L*a*b* colorimetric system diagram are both in the range of from 20 to -20, more preferably from 15 to -15, and particularly from 10 to -10. Similarly, the film thickness of the composite functional layer is preferably set so that c* value in an L*a*b* colorimetric system diagram represented by the following formula (1) is not more than 30, more preferably not more than 25, still more preferably not more than 20, and particularly not more than 10.

In the present invention, by setting the film thickness of the composite functional layer so that the a* and the b* value (or the c* value) in the L*a*b* colorimetric system diagram are defined as described above, the color tone on the surface of the anti-fog mirror includes from a situation of "darkish color tone" (color tone which is colorless and is capable of repressing a reflection color) to a preferred situation, which is substantially colorless and transparent in "brightness and chroma" in the L*a*b* colorimetric system diagram.

The term photocatalytic reaction intended herein means a phenomenon that upon exciting a semiconductor such as $TiO_2$ with a wavelength having an energy not more than the band gap thereof, electron-positive hole pairs are formed, and these electron-positive hole pairs are taken on the surface of the semiconductor, whereby a substance adhered on the surface of the semiconductor undergoes an oxidation/reduction (redox reaction) . Since the positive holes of excited $TiO_2$ have strong oxidizing power, an organic substance adhered on the surface is decomposed due to the photocatalytic reaction, and then removed.

In the present invention, the composite layer may be composed of a photocatalytic functional layer having a hydrophilic functional layer stacked thereon (a second embodiment).

By such a configuration, even if water is adhered on the hydrophilic functional layer provided on the surface of the anti-fog mirror, the water droplet is difficult to be formed due to the hydrophilic functional layer. Also, due to the photocatalytic reaction of the photocatalytic functional layer provided under the hydrophilic functional layer, the hydrophilicity can be prevented from being decreased, making it possible to maintain an anti-fog property over prolong period of time.

Here, the photocatalytic functional layer intended herein is a layer containing a photocatalytic functional substance, or a layer consisting essentially of a photocatalytic functional substance.

In the present invention, the anti-fog mirror may provide a reflectance regulating layer comprising a substance having a reflectance lower than that of the composite functional layer (photocatalytic functional layer) between the metal-made reflecting layer and the composite functional layer (photocatalytic functional layer) (third and fourth embodiment).

By such a configuration, since the reflectance can be compensated by suitably adjusting the film thickness of the reflectance regulating layer, the a* value and the b* value (or c* value) in the L*a*b* colorimetric system diagram are both reaching "0", making the reflection color near colorless. Consequently, the reflection color can further be a neutral color tone.

Furthermore, in the anti-fog mirror according to the present invention, the hydrophilic functional layer is preferably composed of $SiO_2$ as a main component (more preferably consist essentially of $SiO_2$), and the photocatalytic functional layer is preferably composed of $TiO_2$ as a main component (more preferably consist essentially of $TiO_2$).

By such a configuration, even if the opening of the porous substance does not arrive at the surface of the photocatalytically reactive substance described above (photocatalytic functional layer) (i.e., the opening is blocked on the way to the surface of the film of the photocatalytic functional layer), since a light beam for bringing about the photocatalytic reaction (mainly ultraviolet lay in the case of $TiO_2$) may be transmitted through the transparent porous inorganic oxide film, and since electrons and positive holes produced at the photocatalytic functional layer may be transmitted through the porous inorganic oxide film, an organic substance or an $NO_x$ entering in the opening of the porous substance and adhered thereon can be decomposed and removed by the photocatalytic reaction.

In the anti-fog mirror according to the present invention, the metal-made reflecting layer may be composed of at least one member selected from the group consisting of Cr, Cr-Rh alloys, Al, Rh, Ti-Rh alloys, and Ag, the substance having a reflectance lower than that of the composite functional layer (photocatalytic functional layer) provided between the metal-made reflecting layer and the composite functional layer (photocatalytic functional layer) may be composed of at least one member selected from the group consisting of $Ta_2O_5$, $ZrO_2$, $SnO_2$, $In_2O_3$, SiO, ZnO. $Al_2O_3$, ITO, $Y_2O_3$, MgO, $WO_3$, $ZrO_2$, and $TiO_2$.

In such a configuration, the anti-fog mirror having a desired effect can be realized.

In the anti-fog mirror according to the present invention, since the distance between the metal-made reflecting layer and the surface of the mirror can be set to be short, generation of double image in human eyes can be prevented, which will be described later on.

Furthermore, the anti-fog mirror composed as described above can be applied to an automobile exterior mirror or to a medical mirror.

In this configuration, an automobile exterior mirror or to a medical mirror whose reflection color is neutral and in which generation of double image in human eyes can be prevented can be realized.

BRIEF DESCRIPTION OF THE DRAWINGS

FIG. 1 is a cross-sectional view schematically showing a configuration of the anti-fog mirror according to the first embodiment of the present invention.
FIG. 2 is a cross-sectional view schematically showing a configuration of the anti-fog mirror according to the second embodiment of the present invention.

FIG. 3 is a cross-sectional schematically view showing a configuration of the anti-fog mirror according to the third embodiment of the present invention.

FIG. 4 is a cross-sectional view schematically showing a configuration of the anti-fog mirror according to the fourth embodiment of the present invention.

FIG. 5 is an enlarged cross-sectional view schematically showing a configuration of the conventional anti-fog mirror.

FIG. 6 is a graph showing spectra reflectance characteristics possessed by a $TiO_2$ film, each having different film thickness, together with the a* value and the b* value in the L*a*b* colorimetric system diagram, and FIG. 6A, FIG. 6B, and FIG. 6C are showing blue color tone, yellow color tone, and red color tone, respectively,

DESCRIPTION OF THE PREFERRED EMBODIMENTS

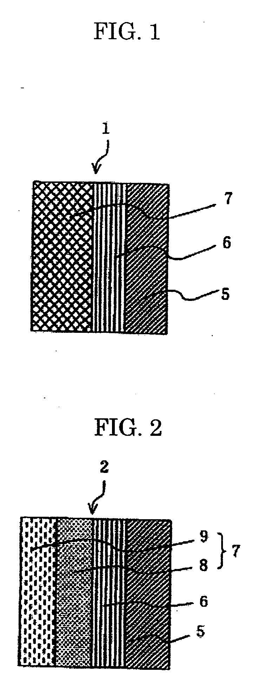

Embodiments of the present invention will now be described by referring to FIG. 1 to FIG. 4.

In the following description, members or parts having the same conditions are symbolized to the same numbers and repeated description will be omitted.

(First Embodiment)

The first embodiment according to the present invention corresponds to the main claim, and an anti-fog mirror 1 according to this embodiment is composed of a substrate 5, a metal-made reflecting film 6 provided on the surface of the substrate 5, a composite functional layer 7 possessing a photocatalytic function and a hydrophilic function provided on the metal-made reflecting film 6. The film thickness of the composite functional layer 7 is set so that the a* value and the b* value in the L*a*b* colorimetric system diagram are both ranging from 25 to -25 (preferably from 20 to -20). Alternatively, the film thickness of the composite functional layer 7 is set so that the c* value in the L*a*b* colorimetric system diagram represented by the following formula (1) is not more than 35 (preferably not more than 30).

(Composite Functional Layer)

In the anti-fog mirror 1, by setting the film thickness of the composite functional layer 7 so that the a* value and the b* value in the L*a*b* colorimetric system diagram are both ranging from 25 to -25 or so that c* value in an L*a*b* colorimetric system diagram represented by the following formula (1) is not more than 35, spectral reflectance of the reflection light (relation between the wavelength and the reflectance of the reflection light) has no specific peak at a visible wavelength region. Consequently, the anti-fog mirror 1 according to this embodiment is configured so that the mirror surface exhibits a color near a neutral color tone. As a result, the anti-fog mirror 1 whose reflection light is near colorless can visibly confirm the color possessed by the substance itself in a substantially precise manner.

In the anti-fog mirror 1, by setting film thickness of the composite functional layer 7 so that the a* value and the b* value in the L*a*b* colorimetric system diagram are both ranging from 20 to -20 or so that the c* value in the L*a*b* colorimetric system diagram represented by the following formula (1) is not more than 30, the spectral reflectance of the reflection light (relation between the wavelength and the reflectance of the reflection light) has no specific peak at a visible wavelength region. Consequently, the anti-fog mirror 1 according to this embodiment is configured so that the mirror surface exhibits a color, which is of a neutral tone. As a result, the anti-fog mirror 1 whose reflection light becomes substantially colorless can visibly confirm the color possessed by the substance itself in a precise manner.

Also, since the composite functional layer 7 possesses hydrophilicity due to the hydrophilic functional layer contained therein, it exhibits an anti-fog effect by spreading a water droplet adhered thereon in a thin film state. In the case where organic substances such as wax, bacteria, $NO_x$ in the atmosphere and the like (hereinafter referred to as "organic substances and the like") are adhered on this surface, a sunlight or any other light beam (such as ultraviolet beam) is irradiated to the photocatalytic substance contained in the composite functional layer 7 to thereby excite the photocatalytic substance. An electron-positive hole pair is formed by this light excitation and is reacted with the organic substance and the like adhered oh the surface, whereby the redox reaction proceeds to decompose and remove the organic substances and the like. Consequently, the decreasing of the hydrophilicity can be prevented, and the anti-fog property can be maintained over prolong period of time.

In the present invention, in order to be in harmonization of the effects of the hydrophilic function and photocatalytic function with cost, the hydrophilic layer contained in the composite functional layer 7 is preferably composed of $SiO_2$, and the photocatalytic substance is preferably composed of $TiO_2$. By forming the composite functional layer 6 in a porous form, the hydrophilic function can be much more enhanced. The present invention is not restricted to the form of the composite functional layer 7, and the composite functional layer 7 may be composed, for example, of a photocatalytic substance also having a hydrophilic function alone, a mixture of a photocatalytic substance with a hydrophilic functional substance [a construction where a photocatalytic substance and a hydrophilic functional substance are randomly mixed, a single layer construction where a photocatalytic substance (e.g., $TiO_2$) is dispersed in a hydrophilic functional substance

(e.g., SiO$_2$) or such], a multilayered structure where photocatalytic substances and hydrophilic functional substances are alternatively stacked, and the like.

The composite functional layer 7 as described above can be formed in any of the conventionally known film formation methods. For example, a single layer of a photocatalytic substance also having a hydrophilic function is formed by a sputtering method only utilizing a target comprising TiO$_2$ described above. Alternatively, SiO$_2$ and TiO$_2$ may be used as targets to form their film on this order or mutually or to deposit them with each other to form the multilayered film described above, whereby the composite functional layer 7 exhibiting effects of the present invention can be formed.

(How to Set a* Value and b* Value in L*a*b* Colorimetric System Drawing)

In the anti-fog mirror 1 according to the present invention, the film thickness of the composite is controlled so that the a* value and the b* value in the L*a*b* colorimetric system diagram are both ranging from 25 to -25 (or the c* value is not more than 35), preferably the a* value and the b* value are both ranging from 20 to -20 (or the c* value is not more than 30), whereby the anti-fog mirror 1 is composed so that the color tone is near neutral and the reflection color exhibits colorless, and preferably so that the color tone becomes neutral and the reflection color exhibits colorless. The control of the composite functional layer 7 can be performed, for example, in the case of the composite functional layer 7 comprising two layers of the photocatalytic functional layer and the hydrophilic functional layer, by suitably controlling either or both of their film thicknesses.

(Metal-Made Reflecting Film)

As the metal-made reflecting film contained in the anti-fog mirror 1 according to the present invention, preference is given to use at least one member selected from the group consisting of Cr, Cr-Rh alloys, Al, Rh, Ti-Rh alloys, and Ag from the viewpoint of cost. The same is applicable to other embodiments, which will be described later on.

(Substrate)

In the anti-fog mirror 1 according to the present invention, the substrate is not specifically restricted, and it may be suitably selected from among the materials such as the conventionally known various glasses, and various metals so as to harmonize required characteristics such as strength, smoothness, and cost. For example, in the case of applying the anti-fog mirror 1 to an automobile exterior mirror or a medical mirror according to the present invention, the conventionally known soda-lime glass may be used as the substrate. The same is applicable to other embodiments, which will be described later on.

(Second Embodiment)

The second embodiment according to the present invention corresponds to an embodiment shown in FIG. 2, and as shown in FIG. 2, an anti-fog mirror 1 according to this embodiment is composed of a substrate 5, a metal-made reflecting film 6 provided on the surface of the substrate 5, and a composite functional layer 8 comprising a photocatalytic functional layer 8 and a hydrophilic functional layer 9 stacked on this order. The film thickness of the composite functional layer 7 is set so that the a* value and the b* value in the L*a*b* colorimetric system diagram are both ranging from 25 to -25 (or the c* value is not more than 35), preferably the a* value and the b* value are both ranging from 20 to -20 (or the c* value is not more than 30).

We have examined parameters having influences upon the spectral reflectance of the reflection light from the anti-fog mirror, and it has been clarified that in the case where the composite functional layer 7 comprises two layers of a photocatalytic functional layer 8 and a hydrophilic functional layer 9 (see FIG. 2), it has greatly depends upon the film thickness of the photocatalytic functional layer 8. Consequently, in the present invention, the relation between the film thickness of the photocatalytic functional layer 8 and the a* value and the b* value (or c* value) in the L*a*b* colorimetric system diagram is clarified by conducting experiments or simulation while setting desired preconditions as described in the following working examples. From the relation, such a film thickness of the photocatalytic functional layer 8 that the a* value and the b* value in the L*a*b* colorimetric system diagram are both ranging from 25 to -25, (or the c* value is not more than 35), in which case the color tone is near neutral and the reflection color exhibits colorless or such a film thickness of the photocatalytic functional layer 8 that the a* value and the b* value are both ranging from 20 to -20 (or the c* value is not more than 30), in which case the color tone becomes neutral and the reflection color exhibits colorless, is determined. This makes it possible to determine the conditions required for the present invention in a relatively easy manner.

In the anti-fog mirror 2, by setting the film thickness of the photocatalytic functional layer 8 and that of the hydrophilic functional layer 9 so that the a* value and the b* value in the L*a*b* colorimetric system diagram are both ranging from 25 to -25 (or the c* value is not more than 35), preferably so that the a* value and the b* value in the L*a*b* colorimetric system diagram are both ranging from 20 to -20 (or the c* value is not more than 30), the anti-fog mirror 2 is composed so that the color tone is near neutral and the reflection color is near colorless (the mirror surface is also near colorless), and preferably so that the color tone becomes neutral and the reflection color becomes colorless (the mirror surface also becomes colorless). As a result, the anti-fog mirror 2 whose reflection light is near colorless can visibly confirm the color possessed by the substance itself in a substantially precise manner. As a more preferable results, the anti-fog mirror 2 whose reflection light becomes substantially colorless can visibly confirm the color possessed by the substance itself in a precise manner.

Also, since the anti-fog mirror 2 possesses hydrophilicity due to the hydrophilic functional layer 9, it exhibits an anti-fog effect by spreading a water droplet adhered thereon in a thin film state. Also, even if the organic substances and the like are adhered on the surface, when a sunlight or any other light beam (such as ultraviolet beam) is irradiated to the photocatalytic functional layer 9, the photocatalytic reaction described above proceeds at the photocatalytic functional layer 9 to decompose and remove the organic substance and the like. Consequently, the decreasing of the hydrophilicity can be prevented, and the anti-fog property can be maintained over prolong period of time.

In the present invention, in order to be in harmonization of the effects of the hydrophilic function and photocatalytic function with cost, the hydrophilic layer 9 is preferably composed of $SiO_2$, and the photocatalytic functional layer 8 is preferably composed of $TiO_2$. By forming the composite functional layer 6 in a porous form, the hydrophilic function can be much more enhanced.

In the present invention, the hydrophilic functional layer is preferably a transparent porous film made of an inorganic oxide. More preferably, the opening of the transparent porous film made of an inorganic oxide arrives at the surface of the photocatalytic reactive substance film (photocatalytic functional layer 8). In this case, the form of the pore is required to have a shape and size sufficient for having no influence upon light interference. By such a configuration, pores on the surface of the hydrophilic functional layer can give highly hydrophilic function.

In the present invention, even if the opening of the porous substance does not arrive at the surface of the photocatalytically reactive substance described above (photocatalytic functional layer 8)), [i.e., the opening is blocked on the way to the surface of the film of the photocatalytically reactive substance (photocatalytic functional layer 8)], since a light beam for bringing about the photocatalytic reaction (mainly ultraviolet lay in the case of $TiO_2$) is transmitted through a transparent porous inorganic oxide film, and since electrons and positive holes produced at the photocatalytic functional layer are transmitted through the porous inorganic oxide film, an organic substance or an $NO_x$ entering in the opening of the porous substance and adhered thereon can be decomposed and removed by the photocatalytic reaction.

(Third Embodiment)

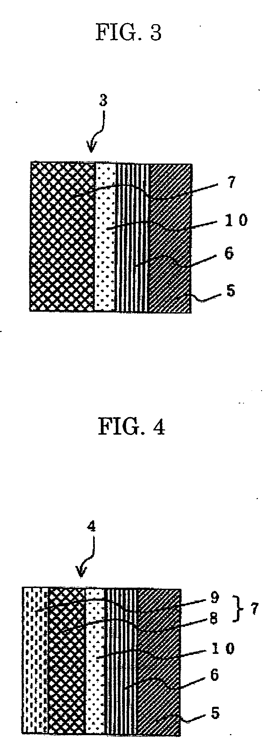

The third embodiment according to the present invention corresponds to an embodiment shown in FIG. 3, and as shown in FIG. 3, an anti-fog mirror 3 according to this embodiment is composed of a substrate 5, a metal-made reflecting film 6 provided on the surface of the substrate 5, a reflectance regulating layer 10 provided on the metal-made reflecting film 6 comprising a substance having a reflectance lower than that of a composite functional layer 7 (photocatalytic substance), and a composite functional layer 8, provided on the reflectance regulating layer 10 , having both a photocatalytic function and a hydrophilic functional layer (for example, a composite functional layer 7 solely comprising $TiO_2$) . The film thickness of the composite functional layer 7 is set so that the a* value and the b* value in the L*a*b* colorimetric system diagram are both ranging from 25 to -25 (or the c* value is not more than 35), preferably the a* value and the b* value are both ranging from 20 to -20 (or c* value is not more than 30).

The anti-fog mirror 3 adds the anti-fog mirror 1 according to the first embodiment to the reflectance regulating layer 10 comprising a substance having a reflectance lower than that of a composite functional layer 7 (photocatalytic substance contained in the composite functional layer 7) provided between the metal-made reflecting film 6 and the composite functional layer 7). Consequently, the description of the parts having the same number as the construction elements of the first embodiment will be omitted.

(Reflectance Regulating Layer)

The reflectance regulating layer 10 is added so that the a* value and the b* value (or the c* value) in the L*a*b* colorimetric system diagram approach "0" by suitably controlling the film thickness of this layer, whereby the reflection color becomes near colorless to make the reflection color much more neutral. In the present invention, the reflectance regulating layer 10 is preferably composed of at least one member selected from the group consisting of $Ta_2O_5$, $ZrO_2$, $SnO_2$, $In_2O_3$, SiO, ZnO. $Al_2O_3$, ITO, $Y_2O_3$, MgO, $WO_3$, $ZrO_2$, and $TiO_2$. The regulation of the reflectance is performed by suitably controlling the film thickness of the reflectance regulating layer 10. The reflectance values of various reflectance regulating layers, which can be used in the present invention, are shown in Table 1.

Table 1 Reflectance of Various Inorganic Oxides

| Inorganic Oxide | Reflectance |
|---|---|
| $TiO_2$ | 2.35 |
| $SiO_2$ | 1.46 |
| $Ta_2O_5$, | 2.10 |
| $ZrO_2$ | 2.05 |
| $SnO_2$ | 2.00 |
| $In_2O_3$ | 2.00 |
| SiO | 1.90 |
| ZnO | 2.10 |
| $Al_2O_3$ | 1.60 |
| ITO[*1)] | 2.00 |
| $Y_2O_3$ | 1,87 |
| MgO | 1.72 |
| $WO_3$ | 1.70 |
| $ZrO_2+TiO_2$ | 2.10 |
| $Al_2O_3+ZrO_2$ | 1.70 |
| *1) Indium Tin Oxide | |

(Fourth Embodiment)

The fourth embodiment according to the present invention corresponds to an embodiment shown in FIG. 4, and as shown in FIG. 4, an anti-fog mirror 4 according to this embodiment is composed of a substrate 5, a metal-made reflecting film 6 provided on the surface of the substrate 5, a reflectance regulating layer 10 provided on the metal-made reflecting film 6 comprising a substance having a reflectance lower than that of a photocatalytic functional layer 7 (photocatalytic substance), a composite functional layer 7 having a photocatalytic functional layer 8 and a hydrophilic functional layer 9 stacked on this order provided on the reflectance regulating layer 10. The film thickness of the composite functional layer 7 is set so that the a* value and the b* value in the L*a*b* colorimetric system diagram are both ranging from 25 to -25 (or the c* value is not more than 35), preferably the a* value and the b* value are both ranging from 20 to -20, (or the c* value is not more than 30).

The anti-fog mirror 4 adds the anti-fog mirror 2 according to the second embodiment to the reflectance regulating layer 10 comprising a substance having a reflectance lower than that of a photocatalytic functional layer 8 (photocatalytic functional substance) provided between the metal-made reflecting film 6 and the photocatalytic functional layer 8 . Consequently, the description of the parts having the same number as the construction elements of the second embodiment will be omitted.

EXAMPLES

The present invention will now be described in more detail using Examples 1 to 3.

EXAMPLE 1

Example 1-1 to Example 1-4 each has a configuration corresponding to the first embodiment shown in FIG. 1.

(Example 1-1)

An anti-fog mirror 1 was composed of a substrate 5 made of glass (see FIG. 1), having a metal-made reflecting film 6 made of Cr (thickness: 100 nm) provided thereon, and further a composite functional layer 7 solely comprising $TiO_2$ with a prescribed thickness provided on the metal-made reflecting film 6 wherein the thickness of the composite functional layer 7 was varied from 50 nm to 300 nm at intervals of every 10 nm. Table 2 shows relation among the thickness of the composite functional film comprising $TiO_2$, the a* value and the b* value in the L*a*b colorimetric system diagram (hereinafter simply referred to as "a* value" and "b* value", respectively), and the chroma c* value (hereinafter simply referred to as "c* value").

Table 2 a*, b* value and c* value of Substrate(Glass)/Metal-made Reflecting Film (Cr; 100nm)/$TiO_2$;50-300nm)

| No. | Thickness of $TiO_2$ (nm) | a* | b* | c* |
|---|---|---|---|---|
| 1101 | 50 | 11.66 | -47.03 | 48.45 |
| 1102 | 60 | -8.82 | -38.13 | 39.14 |
| 1103 | 70 | -11.75 | -24.50 | 27.17 |
| 1104 | 80 | -9.57 | -14.13 | 17.07 |
| 1105 | 90 | -7.89 | -5.47 | 9.60 |
| 1106 | 100 | -8.07 | 5.05 | 9.52 |
| 1107 | 110 | -9.69 | 21.10 | 23.22 |
| 1108 | 120 | -7.57 | 37.46 | 38.22 |
| 1109 | 130 | 5.45 | 31.70 | 32.17 |
| 1110 | 140 | 26.53 | 3.16 | 26.72 |
| 1111 | 150 | 42.68 | -25.31 | 49.62 |
| 1112 | 160 | 39.29 | -43.04 | 58.28 |
| 1113 | 170 | 11.43 | -45.60 | 47.01 |
| 1114 | 180 | -21.78 | -35.07 | 41.28 |
| 1115 | 190 | -38.79 | -17.28 | 42.46 |
| 1116 | 200 | -39.77 | 2.96 | 39.88 |
| 1117 | 210 | -32.38 | 20.40 | 38.27 |
| 1118 | 220 | -19.84 | 27.17 | 33.64 |
| 1119 | 230 | -3.69 | 19.94 | 20.28 |
| 1120 | 240 | 13.12 | 5.82 | 14.35 |
| 1121 | 250 | 27.33 | -8.00 | 28.48 |
| 1122 | 260 | 35.82 | -18.40 | 40.27 |
| 1123 | 270 | 35.15 | -23.83 | 42.47 |
| 1124 | 280 | 22.71 | -23.26 | 32.51 |
| 1125 | 290 | 0.01 | -16.93 | 16.93 |
| 1126 | 300 | -25.03 | -7.16 | 26.03 |

As shown in Table 2, Nos. 1104, 1105, 1106, 1119, 1120, 1124, and 1125 (thickness of $TiO_2$ was 80,90,100,230,240, 280, 290 nm, respectively) were within Example 1-1 according to the present invention where both the a* value and the b* value were ranging from 25 to -25. Preferred samples were Nos. 1104, 1105, 1106, 1119, and 1125 (thickness of $TiO_2$ was 80,90,100,230, and 290 nm, respectively) where both the a* value and the b* value were ranging from 20 to -20.

Also, within Example 1-1 according to the present invention were Nos. 1103, 1104, 1105, 1106, 1107, 1109, 1110, 1118, 1119, 1120, 1121,1124, 1125, and 1126 (the thickness of $TiO_2$ was 70, 80, 90, 100, 110, 130, 140, 220, 230, 240, 250, 280, 290, 300 nm, respectively) where the c* value was not more than 35. Preferred samples were Nos. 1104, 1105, 1106, 1119, and 1125 (the thickness of $TiO_2$ was 80, 90, 100, 230, and 290 nm, respectively) where the c* value was not more than 30.

(Example 1-2)

In Example 1-2, an anti-fog mirror 1 was composed of a substrate 5 made of glass (see FIG. 1), having a metal-made reflecting film 6 made of Rh (thickness: 100 nm) provided thereon, and further a composite functional layer 7 solely comprising $TiO_2$ with a prescribed thickness provided on the metal-made reflecting film 6, wherein the thickness of the composite functional layer 7 was varied from 50 nm to 300 nm at intervals of every 10 nm. Table 3 shows relation among the thickness of the composite functional film comprising $TiO_2$, the a* value, the b* value, and the c* value.

Table 3 a*, b* value and c* value of Substrate(Glass)/Metal-made Reflecting Film (Rh; 100 nm)/$TiO_2$:50-300 nm)

| No. | Thickness of $TiO_2$ (nm) | a* | b* | c* |
|---|---|---|---|---|
| 1201 | 50 | 7.52 | -23.66 | 24.83 |
| 1202 | 60 | -4.79 | -19.71 | 20.28 |
| 1203 | 70 | -5.84 | -11.38 | 12.79 |
| 1204 | 80 | -4.32 | -4.89 | 6.52 |
| 1205 | 90 | -3.51 | 0.92 | 3.63 |
| 1206 | 100 | -4.12 | 8.96 | 9.86 |
| 1207 | 110 | -6.22 | 22.76 | 23.59 |
| 1208 | 120 | -5.43 | 38.28 | 38.66 |
| 1209 | 130 | 5.14 | 34.63 | 35.01 |
| 1210 | 140 | 22.68 | 10.14 | 24.84 |
| 1211 | 150 | 34.55 | -13.47 | 37.08 |
| 1212 | 160 | 29.65 | -26.79 | 39.96 |
| 1213 | 170 | 8.30 | -28.06 | 29.26 |
| 1214 | 180 | -14.07 | -19.83 | 24.31 |
| 1215 | 190 | -24.91 | -5.86 | 25.59 |
| 1216 | 200 | -25.71 | 10.67 | 27.84 |
| 1217 | 210 | -21.26 | 25.34 | 33.08 |
| 1218 | 220 | -12.71 | 30.90 | 33.41 |
| 1219 | 230 | -0.48 | 23.92 | 23.92 |
| 1220 | 240 | 12.78 | 10.87 | 16.78 |
| 1221 | 250 | 23.78 | -1.33 | 23.82 |
| 1222 | 260 | 29.70 | -9.82 | 31.28 |
| 1223 | 270 | 27.93 | -13.43 | 30.99 |
| 1224 | 280 | 17.3 | -11.59 | 20.82 |
| 1225 | 290 | 0.14 | -5.04 | 5.04 |
| 1226 | 300 | -17.34 | 3.89 | 17.77 |

As shown in Table 3, Nos. 1201, 1202, 1203, 1204, 1205, 1206, 1207, 1210, 1214, 1215, 1219, 1220, 1221, 1224, 1225, and 1226 (thickness of $TiO_2$ was 50, 60, 70, 80, 90, 100, 110, 140, 180, 190, 230, 240, 250, 280, 290, and 300 nm, respectively) were within Example 1-2 according to the present invention where both the a* value and the b* value were ranging from 25 to -25. Preferred samples were Nos . 1202, 1203, 1204, 1205, 1206, 1214, 1220, 1224, 1225, and (thickness of $TiO_2$ was 60, 70, 80, 90, 100, 180, 240, 280, 290, and 300 nm, respectively) where both the a* value and the b* value were ranging from 20 to -20.
Also, within Example 1-2 according to the present invention were Nos. .1201, 1202, 1203, 1204, 1205, 1206, 1207, 1210, 1213, 1214, 1215, 1217, 1218, 1219, 1220, 1221, 1222, 1223, 1224, 1225, and 1226 (the thickness of $TiO_2$

was 50, 60, 70, 80, 90, 100, 110, 140, 170, 180, 190, 210, 220, 230, 240, 250, 260, 270, 280, 290, and 300 nm, respectively) where the c* value was not more than 35. Preferred samples were Nos. 1201, 1202, 1203, 1204, 1205, 1206, 1207, 1210, 1213, 1214, 1215, 1219, 1220, 1221, 1224, 1225, and 1226 (the thickness of $TiO_2$ was 50, 60, 70, 80, 90, 100, 110, 140, 170, 180, 190, 230, 240, 250, 280, 290, and 300 nm, respectively) where the c* value was not more than 30.

(Example 1-3)

In Example 1-3, an anti-fog mirror 1 was composed of a substrate 5 made of glass (see FIG. 1), having a metal-made reflecting film 6 made of A1 (thickness: 100 nm) provided thereon, and further a composite functional layer 7 solely comprising $TiO_2$ with a prescribed thickness provided on the metal-made reflecting film 6, wherein the thickness of the composite functional layer 7 was varied from 50 nm to 300 nm at intervals of every 10 nm. Table 3 shows relation among the thickness of the composite functional film comprising $TiO_2$, the a* value, the b* value, and the c* value.

Table 4 a*value, b* value and c* value of Substrate(Glass)/Metal-made Reflecting Film (Al;100 nm)/$TiO_2$;50-300 nm

| No. | Thickness of $TiO_2$ (nm) | a* | b* | c* |
|---|---|---|---|---|
| 1301 | 50 | 0.61 | -12.22 | 12.24 |
| 1302 | 60 | -4.74 | -10.29 | 11.33 |
| 1303 | 70 | -4.48 | -6.27 | 7.71 |
| 1304 | 80 | -3.08 | -3.36 | 4.56 |
| 1305 | 90 | -2.24 | -1.11 | 2.50 |
| 1306 | 100 | -2.23 | 1.68 | 2.79 |
| 1307 | 110 | -3.15 | 6.43 | 7.16 |
| 1308 | 120 | -3.28 | 11.44 | 11.90 |
| 1309 | 130 | 0.68 | 10.21 | 10.23 |
| 1310 | 140 | 7.75 | 2.09 | 8.03 |
| 1311 | 150 | 12.47 | -6.45 | 14.04 |
| 1312 | 160 | 10.49 | -11.08 | 15.26 |
| 1313 | 170 | 2.15 | -12.65 | 12.83 |
| 1314 | 180 | -6.96 | -9.95 | 12.14 |
| 1315 | 190 | -11.73 | -4.70 | 12.64 |
| 1316 | 200 | -12.04 | 1.61 | 12.15 |
| 1317 | 210 | -10.01 | 7.00 | 12.21 |
| 1318 | 220 | -6.48 | 9.18 | 11.24 |
| 1319 | 230 | -1.52 | 7.19 | 7.35 |
| 1320 | 240 | 3.89 | 2.83 | 4.81 |
| 1321 | 250 | 8.41 | -1.58 | 8.56 |
| 1322 | 260 | 10.93 | -4.82 | 11.95 |
| 1323 | 270 | 10.41 | -6.34 | 12.19 |
| 1324 | 280 | 6.46 | -5.90 | 8.75 |
| 1325 | 290 | -0.02 | -3.84 | 3.84 |
| 1326 | 300 | -6.89 | -0.92 | 6.95 |

As shown in Table 4, all of Nos. 1301 to 1326 (thickness of $TiO_2$ was within the range of from 50 to 300 nm) were within Example 1-3 according to the present invention where both the a* value and the b* value were ranging from 20 to -20, and where the c* value was not more than 30.

(Example 1-4)

In Example 1-4, an anti-fog mirror 1 was composed of a substrate 5 made of glass (see FIG. 1), having a metal-made reflecting film 6 made of Ag (thickness: 100 nm) provided thereon, and further a composite functional layer 7 solely comprising $TiO_2$ with a prescribed thickness provided on the metal-made reflecting film 6, wherein the thickness of the composite functional layer 7 was varied from 50 nm to 300 nm at intervals of every 10 nm. Table 5 shows relation among the thickness of the composite functional film comprising $TiO_2$, the a* value, the b* value, and the c* value.

Table 5 a*value, b* value and c* value of Substrate(Glass)/Metal-made Reflecting Film (Ag;100 nm)/$TiO_2$;50-300 nm

| No. | Thickness of $TiO_2$ (nm) | a* | b* | c* |
|---|---|---|---|---|
| 1401 | 50 | -0.57 | -1.01 | 1.16 |
| 1402 | 60 | -0.67 | -0.44 | 0.80 |
| 1403 | 70 | -0.52 | 0.09 | 0.53 |
| 1404 | 80 | -0.51 | 0.66 | 0.83 |
| 1405 | 90 | -0.77 | 1.66 | 1.83 |
| 1406 | 100 | -1.44 | 3.60 | 3.88 |
| 1407 | 110 | -1.75 | 5.43 | 5.71 |
| 1408 | 120 | -0.54 | 4.85 | 4.88 |
| 1409 | 130 | 1.54 | 2.26 | 2.73 |
| 1410 | 140 | 2.80 | -0.12 | 2.80 |
| 1411 | 150 | 2.45 | -1.38 | 2.81 |
| 1412 | 160 | 0.78 | -1.53 | 1.72 |
| 1413 | 170 | -1.13 | -0.72 | 1.34 |
| 1414 | 180 | -2.44 | 0.91 | 2.60 |
| 1415 | 190 | -2.98 | 2.89 | 4.15 |
| 1416 | 200 | -2.83 | 4.40 | 5.23 |
| 1417 | 210 | -2.00 | 4.68 | 5.09 |
| 1418 | 220 | -0.60 | 3.68 | 3.73 |
| 1419 | 230 | 0.89 | 2.13 | 2.31 |
| 1420 | 240 | 1.98 | 0.82 | 2.14 |
| 1421 | 250 | 2.42 | 0.13 | 2.42 |
| 1422 | 260 | 2.03 | 0.16 | 2.04 |
| 1423 | 270 | 0.90 | 0.81 | 1.21 |
| 1424 | 280 | -0.61 | 1.77 | 1.87 |
| 1425 | 290 | -1.98 | 2.70 | 3.35 |
| 1426 | 300 | -2.72 | 3.18 | 4.18 |

As shown in Table 5, all of Nos. 1401 to 1426 (thickness of $TiO_2$ was within the range of from 50 to 300 nm) were within Example 1-4 according to the present invention where both the a* value and the b* value were ranging from 20 to -20, and where the c* value was not more than 30.

EXAMPLE 2

Example 2-1 to Example 2-4 each has a configuration corresponding to the second embodiment shown in FIG. 2. On the substrate 5 was provided the metal-made reflecting film 6, on which the photocatalytic functional layer 8 comprising $TiO_2$ and the hydrophilic functional layer 9 comprising $SiO_2$ were stacked on this order.

(Example 2-1)

In Example 2-1, an anti-fog mirror 2 was composed of a substrate 5 made of glass (see FIG. 2), having a metal-made reflecting film 6 made of Cr (thickness: 100 nm) provided thereon, on which a photocatalytic functional layer 8 comprising $TiO_2$ and a hydrophilic functional layer 9 comprising $SiO_2$ were stacked on this order, wherein the thickness of the photocatalytic functional layer 8 comprising $TiO_2$ was varied from 50 nm to 300 nm at intervals of every 10 nm. Table 6 shows relation among the thickness of the $TiO_2$, the a* value, the b* value, and the c* value.

Table 6 a*value, b* value and c* value of Substrate(Glass)/Cr;100 nm/$TiO_2$;50-300 nm/$SiO_2$;20 nm)

| No. | Thickness of $TiO_2$ (nm) | a* | b* | c* |
|---|---|---|---|---|
| 2101 | 50 | -1.52 | -41.98 | 42.01 |
| 2102 | 60 | -10.89 | -29.80 | 31.73 |
| 2103 | 70 | -10.27 | -18.40 | 21.07 |
| 2104 | 80 | -8.25 | -9.48 | 12.57 |
| 2105 | 90 | -7.44 | -0.61 | 7.46 |
| 2106 | 100 | -8.35 | 11.83 | 14.48 |
| 2107 | 110 | -8.75 | 28.61 | 29.92 |
| 2108 | 120 | -1.94 | 36.40 | 36.45 |
| 2109 | 130 | 15.33 | 18.05 | 23.68 |
| 2110 | 140 | 34.70 | -11.31 | 36.50 |
| 2111 | 150 | 42.01 | -34.64 | 54.45 |
| 2112 | 160 | 26.02 | -44.81 | 51.82 |
| 2113 | 170 | -6.37 | -40.42 | 40.92 |
| 2114 | 180 | -31.37 | -26.13 | 40.83 |
| 2115 | 190 | -39.07 | -7.23 | 39.73 |
| 2116 | 200 | -35.42 | 11.76 | 37.32 |
| 2117 | 210 | -25.73 | 24.58 | 35.58 |
| 2118 | 220 | -11.63 | 24.38 | 27.01 |
| 2119 | 230 | 4.79 | 13.19 | 14.03 |
| 2120 | 240 | 20.31 | -1.03 | 20.34 |
| 2121 | 250 | 31.79 | -13.25 | 34.44 |
| 2122 | 260 | 35.96 | -21.33 | 41.81 |
| 2123 | 270 | 29.56 | -23.91 | 38.02 |
| 2124 | 280 | 11.75 | -20.45 | 23.59 |
| 2125 | 290 | -12.80 | -12.17 | 17.66 |
| 2126 | 300 | -33.75 | -2.61 | 33.85 |

Within Example 2-1 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 6.

(Example 2-2)

In Example 2-2, an anti-fog mirror 2 was composed of a substrate 5 made of glass (see FIG. 2), having a metal-made reflecting film 6 made of Rh (thickness: 100 nm) provided thereon, on which a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 7 shows relation among the thickness of the $TiO_2$, the a* value, the b* value, and the c* value.

Table 7 a*value, b* value and c* value of Substrate(Glass)/Rh;100 nm/$TiO_2$;50-300 nm/$SiO_2$;20 nm

| No. | Thickness of $TiO_2$ (nm) | a* | b* | c* |
|---|---|---|---|---|
| 2201 | 50 | -0.37 | -21.09 | 21.09 |
| 2202 | 60 | -5.49 | -14.28 | 15.30 |
| 2203 | 70 | -4.72 | -7.34 | 8.73 |
| 2204 | 80 | -3.56 | -1.65 | 3.92 |
| 2205 | 90 | -3.42 | 4.69 | 5.80 |
| 2206 | 100 | -4.70 | 14.77 | 15.50 |
| 2207 | 110 | -5.87 | 29.83 | 30.40 |
| 2208 | 120 | -0.91 | 38.03 | 38.04 |
| 2209 | 130 | 13.38 | 23.00 | 26.61 |
| 2210 | 140 | 28.73 | -1.79 | 28.79 |
| 2211 | 150 | 32.67 | -20.24 | 38.43 |
| 2212 | 160 | 19.01 | -27.36 | 33.32 |
| 2213 | 170 | -3.76 | -23.67 | 23.97 |
| 2214 | 180 | -19.94 | -12.66 | 23.62 |
| 2215 | 190 | -24.86 | 2.36 | 24.97 |
| 2216 | 200 | -22.85 | 18.03 | 29.11 |
| 2217 | 210 | -16.70 | 28.78 | 33.27 |
| 2218 | 220 | -6.57 | 28.15 | 28.91 |
| 2219 | 230 | 6.13 | 17.72 | 18.75 |
| 2220 | 240 | 18.26 | 4.92 | 18.91 |
| 2221 | 250 | 26.79 | -5.46 | 27.34 |
| 2222 | 260 | 29.01 | -11.61 | 31.25 |
| 2223 | 270 | 22.88 | -12.58 | 26.11 |
| 2224 | 280 | 8.84 | -8.38 | 12.18 |
| 2225 | 290 | -8.79 | -0.49 | 8.80 |
| 2226 | 300 | -22.84 | 7.90 | 24.17 |

Within Example 2-2 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 7.

(Example 2-3)

In Example 2-3, an anti-fog mirror 2 was composed of a substrate 5 made of glass (see FIG. 2), having a metal-made reflecting film 6 made of Al (thickness: 100 nm) provided thereon, on which a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 8 shows relation among the thickness of the $TiO_2$, the a* value, the b* value, and the c* value.

Table 8 a*value, b* value and c* value of Substrate(Glass)/Al;100 nm/$TiO_2$;50-300 nm/$SiO_2$;20 nm

| No. | Thickness of $TiO_2$ (nm) | a* | b* | c* |
|---|---|---|---|---|
| 2301 | 50 | -2.78 | -11.14 | 11.48 |
| 2302 | 60 | -4.66 | -7.79 | 9.08 |
| 2303 | 70 | -3.56 | -4.51 | 5.75 |
| 2304 | 80 | -2.49 | -2.13 | 3.28 |
| 2305 | 90 | -2.06 | 0.15 | 2.07 |
| 2306 | 100 | -2.44 | 3.58 | 4.33 |
| 2307 | 110 | -3.16 | 8.59 | 9.15 |
| 2308 | 120 | -1.60 | 11.05 | 11.17 |
| 2309 | 130 | 3.98 | 6.26 | 7.42 |
| 2310 | 140 | 10.09 | -2.25 | 10.34 |
| 2311 | 150 | 11.58 | -9.08 | 14.72 |
| 2312 | 160 | 6.25 | -12.11 | 13.63 |
| 2313 | 170 | -2.72 | -11.20 | 11.53 |
| 2314 | 180 | -9.51 | -7.29 | 11.98 |
| 2315 | 190 | -11.67 | -1.61 | 11.78 |
| 2316 | 200 | -10.67 | 4.21 | 11.47 |
| 2317 | 210 | -8.04 | 8.12 | 11.43 |
| 2318 | 220 | -3.95 | 8.25 | 9.15 |
| 2319 | 230 | 1.16 | 5.02 | 5.15 |
| 2320 | 240 | 6.07 | 0.62 | 6.10 |
| 2321 | 250 | 9.59 | -3.19 | 10.11 |
| 2322 | 260 | 10.63 | -5.60 | 12.01 |
| 2323 | 270 | 8.43 | -6.17 | 10.45 |
| 2324 | 280 | 3.20 | -4.94 | 5.89 |
| 2325 | 290 | -3.51 | -2.44 | 4.27 |
| 2326 | 300 | -9.28 | 0.34 | 9.29 |

Within Example 2-3 according to the present invention were all of sample Nos. 2301 to 2326 having the thickness of $TiO_2$ ranging from 50 to 300 nm where both the a* value and the b* value were ranging from 25 to -25, (preferably from 20 to -20) and where the c* value was not more than 35 (preferably not more than 30) in Table 8.

(Example 2-4)

In Example 2-4, an anti-fog mirror 2 was composed of a substrate 5 made of glass (see FIG. 2), having a metal-made reflecting film 6 made of Ag (thickness: 100 nm) provided thereon, on which a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 9 shows relation among the thickness of the $TiO_2$, the a* value, the b* value, and the c* value.

Table 9 a*value, b* value and c* value of Substrate(Glass)/Ag;100 nm/$TiO_2$;50-300 nm/$SiO_2$;20 nm

| No. | Thickness of $TiO_2$ (nm) | a* | b* | c* |
|---|---|---|---|---|
| 2401 | 50 | -0.66 | 0.60 | 0.89 |
| 2402 | 60 | -0.57 | -0.08 | 0.58 |
| 2403 | 70 | -0.49 | 0.41 | 0.64 |
| 2404 | 80 | -0.58 | 1.10 | 1.24 |
| 2405 | 90 | -1.00 | 2.43 | 2.63 |
| 2406 | 100 | -1.57 | 4.40 | 4.67 |
| 2407 | 110 | -1.23 | 5.20 | 5.34 |
| 2408 | 120 | 0.45 | 3.56 | 3.59 |
| 2409 | 130 | 2.16 | 1.05 | 2.40 |
| 2410 | 140 | 2.61 | -0.72 | 2.71 |
| 2411 | 150 | 1.57 | -1.41 | 2.11 |
| 2412 | 160 | -0.23 | -1.10 | 1.12 |
| 2413 | 170 | -1.78 | 0.06 | 1.78 |
| 2414 | 180 | -2.64 | 1.83 | 3.21 |
| 2415 | 190 | -2.82 | 3.58 | 4.56 |
| 2416 | 200 | -2.37 | 4.52 | 5.10 |
| 2417 | 210 | -1.30 | 4.18 | 4.38 |
| 2418 | 220 | 0.13 | 2.91 | 2.91 |
| 2419 | 230 | 1.41 | 1.48 | 2.04 |
| 2420 | 240 | 2.17 | 0.49 | 2.22 |
| 2421 | 250 | 2.21 | 0.14 | 2.21 |
| 2422 | 260 | 1.47 | 0.46 | 1.54 |
| 2423 | 270 | 0.15 | 1.26 | 1.27 |
| 2424 | 280 | -1.30 | 2.20 | 2.56 |
| 2425 | 290 | -2.36 | 2.93 | 3.76 |
| 2426 | 300 | -2.65 | 3.13 | 4.10 |

Within Example 2-4 according to the present invention were all of sample Nos. 2401 to 2426 having the thickness of $TiO_2$ ranging from 50 to 300 nm where both the a* value and the b* value were ranging from 25 to -25, (preferably from 20 to -20) and where the c* value was not more than 35 (preferably not more than 30) in Table 9.

EXAMPLE 3

Example 3-1 to Example 3-12 each has a configuration corresponding to the fourth embodiment shown in FIG. 4.

(Example 3-1)

In Example 3-1, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising $Ta_2O_5$ (thickness: 30 nm), and a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 10 shows relation among the thickness of the $TiO_2$, the a* value, the b* value, and the c* value.

Table 10 a * value, b* value and c* value of Substrate(Glass)/Cr;100 nm/$Ta_2O_5$;30 nm/$TiO_2$;50-300 nm/$SiO_2$;20 nm

| No. | Thickness of $TiO_2$ (nm) | a* | b* | c* |
|---|---|---|---|---|
| 3101 | 50 | -7.64 | -11.70 | 13.97 |
| 3102 | 60 | -6.22 | -4.77 | 7.84 |
| 3103 | 70 | -6.32 | 4.01 | 7.48 |
| 3104 | 80 | -7.50 | 17.63 | 19.16 |
| 3105 | 90 | -4.76 | 30.22 | 30.59 |
| 3106 | 100 | 8.44 | 22.04 | 23.60 |
| 3107 | 110 | 27.66 | -4.55 | 28.03 |
| 3108 | 120 | 38.44 | -29.37 | 48.38 |
| 3109 | 130 | 28.40 | -42.59 | 51.19 |
| 3110 | 140 | -0.32 | -41.62 | 41.62 |
| 3111 | 150 | -25.43 | -30.40 | 39.63 |
| 3112 | 160 | -34.60 | -14.11 | 37.37 |
| 3113 | 170 | -32.93 | 3.63 | 33.13 |
| 3114 | 180 | -25.95 | 18.20 | 31.70 |
| 3115 | 190 | -14.68 | 22.71 | 27.04 |
| 3116 | 200 | 0.07 | 15.00 | 15.00 |
| 3117 | 210 | 15.37 | 1.61 | 15.45 |
| 3118 | 220 | 27.79 | -11.20 | 29.66 |
| 3119 | 230 | 34.00 | -20.63 | 39.77 |
| 3120 | 240 | 30.57 | -25.07 | 39.54 |
| 3121 | 250 | 15.86 | -23.55 | 28.39 |
| 3122 | 260 | -6.86 | -16.71 | 18.06 |
| 3123 | 270 | 28.63 | -7.19 | 29.52 |
| 3124 | 280 | -39.23 | 0.52 | 39.23 |
| 3125 | 290 | -35.50 | 3.12 | 35.64 |
| 3126 | 300 | -22.72 | 1.22 | 22.75 |

Within Example 3-1 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 10.

(Example 3-2)

In Example 3-2, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising $Ta_2O_5$ (thickness: 40 nm), and a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 11 shows relation among the thickness of the $TiO_2$, the a* value, the b* value, and the c* value.

Table 11 a*value, b* value and c* value of Substrate(Glass)/Cr;100 nm/$Ta_2O_5$;40 nm/$TiO_2$;50-300 nm/$SiO_2$;20 nm

| No. | Thickness of $TiO_2$ (nm) | a* | b* | c* |
|---|---|---|---|---|
| 3201 | 50 | -6.04 | -5.65 | 8.27 |
| 3202 | 60 | -5.85 | 2.13 | 6.23 |
| 3203 | 70 | -7.04 | 14.43 | 16.06 |
| 3204 | 80 | -5.86 | 28.59 | 29.18 |
| 3205 | 90 | 5.02 | 25.84 | 26.32 |
| 3206 | 100 | 23.95 | 0.93 | 23.97 |
| 3207 | 110 | 37.23 | -25.35 | 45.04 |
| 3208 | 120 | 30.52 | -40.82 | 50.97 |
| 3209 | 130 | 3.55 | -41.86 | 42.01 |
| 3210 | 140 | -22.62 | -31.94 | 39.14 |
| 3211 | 150 | -33.23 | -16.49 | 37.10 |
| 3212 | 160 | -32.54 | 0.96 | 32.55 |
| 3213 | 170 | -26.95 | 16.45 | 31.27 |
| 3214 | 180 | -16.55 | 23.38 | 28.64 |
| 3215 | 190 | -2.58 | 17.60 | 17.79 |
| 3216 | 200 | 12.73 | 4.51 | 13.51 |
| 3217 | 210 | 25.81 | -8.85 | 27.29 |
| 3218 | 220 | 33.22 | -19.13 | 38.33 |
| 3219 | 230 | 31.45 | -24.59 | 39.92 |
| 3220 | 240 | 18.35 | -24.07 | 30.27 |
| 3221 | 250 | -3.62 | -17.89 | 18.25 |
| 3222 | 260 | -26.10 | -8.39 | 27.42 |
| 3223 | 270 | -38.66 | 0.18 | 38.66 |
| 3224 | 280 | -36.75 | 3.87 | 36.95 |
| 3225 | 290 | -24.79 | 2.55 | 24.92 |
| 3226 | 300 | -9.82 | -1.25 | 9.90 |

Within Example 3-2 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 11.

(Example 3-3)

In Example 3-3, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising $Ta_2O_5$ (thickness: 50 nm), and a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 12 shows relation among the thickness of the $TiO_2$, the a* value, the b* value, and the c* value.

Table 12 a*value, b* value and c* value of Substrate(Glass)/Cr;100 nm/$Ta_2O_5$;50 nm/$TiO_2$;50-300 nm/$SiO_2$;20 nm

| No. | Thickness of $TiO_2$ (nm) | a* | b* | c* |
|---|---|---|---|---|
| 3301 | 50 | -5.63 | 1.07 | 5.73 |
| 3302 | 60 | -6.73 | 12.35 | 14.06 |
| 3303 | 70 | -6.67 | 27.39 | 28.19 |
| 3304 | 80 | 1.92 | 29.88 | 29.94 |
| 3305 | 90 | 20.20 | 7.38 | 21.51 |
| 3306 | 100 | 35.73 | -20.50 | 41.19 |
| 3307 | 110 | 32.91 | -38.58 | 50.71 |
| 3308 | 120 | 8.05 | -41.94 | 42.71 |
| 3309 | 130 | -19.54 | -33.32 | 38.63 |
| 3310 | 140 | -32.16 | -18.51 | 37.11 |
| 3311 | 150 | -32.56 | -1.17 | 32.58 |
| 3312 | 160 | -27.47 | 15.18 | 31.39 |
| 3313 | 170 | -18.47 | 24.42 | 30.62 |
| 3314 | 180 | -5.28 | 20.80 | 21.46 |
| 3315 | 190 | 10.04 | 8.11 | 12.91 |
| 3316 | 200 | 23.82 | -5.89 | 24.54 |
| 3317 | 210 | 32.48 | -17.09 | 36.70 |
| 3318 | 220 | 32.42 | -23.60 | 40.10 |
| 3319 | 230 | 21.03 | -24.11 | 31.99 |
| 3320 | 240 | -0.12 | -18.63 | 18.63 |
| 3321 | 250 | -23.35 | -9.20 | 25.10 |
| 3322 | 260 | -38.01 | 0.15 | 38.01 |
| 3323 | 270 | -38.16 | 5.01 | 38.49 |
| 3324 | 280 | -27.15 | 4.35 | 27.50 |
| 3325 | 290 | -12.14 | 0.57 | 12.15 |
| 3326 | 300 | 1.77 | 3.56 | 3.98 |

Within Example 3-3 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 12.

(Example 3-4)

In Example 3-4, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising $ZrO_2$ (thickness: 30 nm), and a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 mm. Table 13 shows relation among the thickness of the $TiO_2$, the a* value, the b* value, and the c* value.

Table 13 a*value, b* value and c* value of Substrate(Glass)/Cr;10 0nm/ZrO₂:30 nm/TiO₂;50-300 nm/SiO₂;20 nm

| No. | Thickness of TiO₂ (nm) | a* | b* | c* |
|---|---|---|---|---|
| 3401 | 50 | -7.56 | -11.87 | 14.07 |
| 3402 | 60 | -6.02 | -5.25 | 7.99 |
| 3403 | 70 | -5.95 | 2.84 | 6.59 |
| 3404 | 80 | -7.16 | 15.57 | 17.14 |
| 3405 | 90 | -5.30 | 28.67 | 29.16 |
| 3406 | 100 | 6.56 | 23.05 | 23.97 |
| 3407 | 110 | 25.54 | -2.03 | 25.62 |
| 3408 | 120 | 37.08 | -26.76 | 45.73 |
| 3409 | 130 | 28.95 | -40.76 | 49.99 |
| 3410 | 140 | 1.90 | -40.97 | 41.01 |
| 3411 | 150 | -23.34 | -30.97 | 38.64 |
| 3412 | 160 | -33.28 | -15.28 | 36.62 |
| 3413 | 170 | -32.33 | 2.01 | 32.29 |
| 3414 | 180 | -25.87 | 16.75 | 30.82 |
| 3415 | 190 | -15.35 | 22.21 | 27.00 |
| 3416 | 200 | -1.25 | 15.56 | 15.61 |
| 3417 | 210 | 13.70 | 2.74 | 13.97 |
| 3418 | 220 | 26.13 | -9.90 | 27.94 |
| 3419 | 230 | 32.81 | -19.46 | 38.15 |
| 3420 | 240 | 30.38 | -24.28 | 38.89 |
| 3421 | 250 | 16.96 | -23.32 | 28.84 |
| 3422 | 260 | -4.71 | -17.01 | 17.65 |
| 3423 | 270 | -26.33 | -7.79 | 27.46 |
| 3424 | 280 | -37.81 | 0.03 | 37.81 |
| 3425 | 290 | -35.28 | 3.00 | 35.41 |
| 3426 | 300 | -23.35 | 1.45 | 23.39 |

Within Example 3-4 according to the present invention were samples having the thickness of TiO₂ corresponding to sample where both the a* value and the b* value were ranging from 25 to -25, (preferably from 20 to -20) and where the c* value was not more than 35 (preferably not more than 30) in Table 13.

(Example 3-5)

In Example 3-5, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising ZrO₂ (thickness: 40 nm), and a photocatalytic functional layer 8 comprising TiO₂ and a hydrophilic functional layer 9 comprising SiO₂ (thickness: 20 nm) were stacked on this order, wherein the thickness of the photocatalytic functional layer 8 comprising TiO₂ was varied from 50 nm to 300 nm at intervals of every 10 nm. Table 14 shows relation among the thickness of the TiO₂, the a* value, the b* value, and the c* value.

EP 1 623 657 A1

Table 14 a* value, b* value and c* value of Substrate(Glass)/Cr; 100 nm/ZrO$_2$;40 nm/TiO$_2$ ; 50-300 nm/SiO$_2$ ; 20 nm

| Thickness of TiO$_2$ (nm) | a* | b* | c* |
|---|---|---|---|
| 50 | -5.87 | -6.23 | 8.56 |
| 60 | -5.43 | 0.76 | 5.48 |
| 70 | -6.51 | 11.79 | 13.47 |
| 80 | -6.32 | 26.09 | 26.84 |
| 90 | 2.52 | 26.96 | 27.08 |
| 100 | 20.37 | 4.85 | 20.94 |
| 110 | 34.76 | -21.21 | 40.72 |
| 120 | 31.27 | -37.89 | 49.13 |
| 130 | 7.12 | -40.82 | 41.44 |
| 140 | -19.28 | -32.49 | 37.78 |
| 150 | -31.35 | -18.17 | 36.23 |
| 160 | -31.65 | -1.37 | 31.68 |
| 170 | -26.54 | 14.27 | 30.13 |
| 180 | -17.52 | 22.51 | 28.52 |
| 190 | -4.52 | 18.44 | 18.99 |
| 200 | 10.25 | 6.32 | 12.04 |
| 210 | 23.34 | -6.78 | 24.30 |
| 220 | 31.42 | -17.23 | 35.83 |
| 230 | 31.11 | -23.36 | 38.90 |
| 240 | 19.98 | -23.58 | 30.91 |
| 250 | -0.34 | -18.23 | 18.23 |
| -260 | -22.49 | -9.25 | 24.32 |
| 270 | -36.36 | -0.59 | 36.36 |
| 280 | -36.38 | 3.66 | 36.56 |
| 290 | -25.81 | 2.91 | 25.97 |
| 300 | -11.44 | -0.59 | 11.46 |

Within Example 3-5 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 14.

(Example 3-6)

In Example 3-6, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising ZrO$_2$ (thickness: 50 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 15 shows relation among the thickness of the TiO$_2$, the a* value, the b* value, and the c* value.

21

Table 15 a* value, b* value and c* value of Substrate(Glass)/Cr;100 nm/ZrO$_2$;50 nm/TiO$_2$;50-300 nm/SiO$_2$;20 nm

| Thickness of TiO$_2$ (nm) | a* | b* | c* |
|---|---|---|---|
| 50 | -5.22 | -0.45 | 5.24 |
| 60 | -6.05 | 9.26 | 11.06 |
| 70 | -6.91 | 23.82 | 24.80 |
| 80 | -0.95 | 30.63 | 30.64 |
| 90 | 15.43 | 12.78 | 20.04 |
| 100 | 32.06 | -14.50 | 35.19 |
| 110 | 33.54 | -34.23 | 47.92 |
| 120 | 13.07 | -40.33 | 42.39 |
| 130 | -14.53 | -34.04 | 37.01 |
| 140 | -29.52 | -20.75 | 36.08 |
| 150 | -31.51 | -4.31 | 31.80 |
| 160 | -27.50 | 12.15 | 30.06 |
| 170 | -19.75 | 23.02 | 30.33 |
| 180 | -7.84 | 21.86 | 23.22 |
| 190 | 6.71 | 10.69 | 12.62 |
| 200 | 20.47 | -2.93 | 20.68 |
| 210 | 29.99 | -14.37 | 33.26 |
| 220 | 31.84 | -21.63 | 38.49 |
| 230 | 23.12 | -23.29 | 32.82 |
| 240 | 4.35 | -18.99 | 19.48 |
| 250 | -18.24 | -10.36 | 20.98 |
| 260 | -34.59 | -0.98 | 34.60 |
| 270 | -37.51 | 4.63 | 37.79 |
| 280 | -28.58 | 4.82 | 28.98 |
| 290 | -14.48 | 1.52 | 14.56 |
| 300 | -0.69 | -2.55 | 2.64 |

Within Example 3-6 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 15.

(Example 3-7)

In Example 3-7, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising ITO (indium tin oxide) (thickness: 40 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 16 shows relation among the thickness of the TiO$_2$, the a* value, the b* value, and the c* value.

Table 16 a*value, b* value and c* value of Substrate(Glass)/ Cr;100 nm/ITO;40 nm/TiO$_2$;50-300 nm/SiO$_2$;20 nm

| Thickness of TiO$_2$ (nm) | a* | b* | c* |
|---|---|---|---|
| 50 | -6.53 | -4.62 | 8.00 |
| 60 | -6.41 | 3.30 | 7.21 |
| 70 | -7.78 | 15.67 | 17.50 |
| 80 | -7.38 | 30.86 | 31.73 |
| 90 | 1.96 | 31.19 | 31.25 |
| 100 | 20.19 | 7.67 | 21.60 |
| 110 | 35.10 | -19.49 | 40.15 |
| 120 | 32.02 | -36.88 | 48.84 |
| 130 | 7.51 | -40.00 | 40.70 |
| 140 | -20.02 | -31.24 | 37.10 |
| 150 | -33.02 | -16.06 | 36.72 |
| 160 | -33.52 | 1.62 | 33.56 |
| 170 | -28.06 | 17.82 | 33.24 |
| 180 | -18.54 | 26.02 | 31.95 |
| 190 | -5.12 | 21.35 | 21.96 |
| 200 | 9.96 | 8.57 | 13.14 |
| 210 | 23.27 | -4.97 | 23.79 |
| 220 | 31.49 | -15.55 | 35.12 |
| 230 | 31.51 | -21.46 | 37.83 |
| 240 | 19.78 | -21.50 | 29.21 |
| 250 | -0.95 | -15.84 | 15.87 |
| 260 | -23.56 | -6.61 | 24.47 |
| 270 | -37.66 | 2.11 | 37.72 |
| 280 | -37.61 | 6.19 | 38.12 |
| 290 | -26.81 | 5.16 | 27.30 |
| 300 | -12.22 | 1.48 | 12.31 |

Within Example 3-7 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 16.

(Example 3-8)

In Example 3-8, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising ITO (indium tin oxide) (thickness: 50 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 17 shows relation among the thickness of the TiO$_2$, the a* value, the b* value, and the c* value.

Table 17 a*value, b* value and c* value of Substrate(Glass)/Cr;100 nm/ITO;50 nm/TiO$_2$;50-300 nm/SiO$_2$:20 nm

| Thickness of TiO$_2$ (nm) | a* | b* | c* |
|---|---|---|---|
| 50 | -6.34 | 2.50 | 6.82 |
| 60 | 7.60 | 13.91 | 15.85 |
| 70 | -8.29 | 29.88 | 31.01 |
| 80 | -1.63 | 36.38 | 36.42 |
| 90 | 15.30 | 16.73 | 22.67 |
| 100 | 32.57 | -12.12 | 34.75 |
| 110 | 34.72 | -32.94 | 47.86 |
| 120 | 14.00 | -39.46 | 41.87 |
| 130 | -15.06 | -32.75 | 36.05 |
| 140 | -31.49 | -18.40 | 36.47 |
| 150 | -33.95 | -0.74 | 33.96 |
| 160 | -29.56 | 16.57 | 33.89 |
| 170 | -21.14 | 27.60 | 34.77 |
| 180 | -8.63 | 25.81 | 27.21 |
| 190 | 6.34 | 13.74 | 15.13 |
| 200 | 20.46 | -0.52 | 20.47 |
| 210 | 30.23 | -12.25 | 32.62 |
| 220 | 32.12 | -19.46 | 37.56 |
| 230 | 23.16 | -20.82 | 31.14 |
| 240 | 3.86 | -16.14 | 16.60 |
| 250 | -19.40 | -7.13 | 20.67 |
| 260 | -36.21 | 2.42 | 36.29 |
| 270 | -39.15 | 7.91 | 39.94 |
| 280 | -29.95 | 7.78 | 30.94 |
| 290 | -15.52 | 4.21 | 16.08 |
| 300 | -1.48 | 0.07 | 1.48 |

Within Example 3-8 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 17.

(Example 3-9)

In Example 3-9, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising ITO (indium tin oxide) (thickness: 200 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 18 shows relation among the thickness of the TiO$_2$, the a* value, the b* value, and the c* value.

Table 18 a*value, b* value and c* value of Substrate(Glass)/Cr;100 nm/ITO;200 nm/TiO$_2$ ; 50-300 nm/SiO$_2$ ; 20 nm

| Thickness of TiO$_2$ (nm) | A* | b* | c* |
|---|---|---|---|
| 50 | -7.01 | 37.50 | 38.15 |
| 60 | 8.18 | 23.37 | 24.76 |
| 70 | 23.11 | 7.00 | 24.15 |
| 80 | 34.07 | -6.61 | 34.71 |
| 90 | 36.19 | -14.88 | 39.13 |
| 100 | 24.99 | -16.10 | 29.73 |
| 110 | 1.12 | -10.11 | 10.17 |
| 120 | -26.07 | 0.78 | 26.08 |
| 130 | -42.75 | 11.90 | 44.38 |
| 140 | -42.46 | 18.25 | 46.22 |
| 150 | -30.25 | 18.23 | 35.32 |
| 160 | -14.25 | 14.29 | 20.18 |
| 170 | 0.54 | 9.63 | 9.65 |
| 180 | 12.22 | 6.00 | 13.61 |
| 190 | 20.05 | 3.79 | 20.41 |
| 200 | 23.20 | 2.99 | 23.39 |
| 210 | 20.83 | 3.60 | 21.14 |
| 220 | 13.00 | 4.99 | 13.92 |
| 230 | 1.37 | 6.04 | 6.19 |
| 240 | -10.83 | 6.01 | 12.39 |
| 250 | -19.98 | 5.28 | 20.67 |
| 260 | -23.67 | 4.69 | 24.13 |
| 270 | -21.55 | 4.76 | 22.07 |
| 280 | -15.06 | 5.55 | 16.05 |
| 290 | -6.56 | 6.88 | 9.51 |
| 300 | 1.63 | 8.43 | 8.59 |

Within Example 3-9 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 18

(Example 3-10)

In Example 3-10, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising Y$_2$O$_3$ (thickness: 30 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 19 shows relation among the thickness of the TiO$_2$, the a* value, the b* value, and the c* value.

Table 19 a*value, b* value and c* value of Substrate(Glass)/Cr;100 nm/$Y_2O_3$;30 nm/$TiO_2$;50-300 nm/$SiO_2$;20 nm

| Thickness of $TiO_2$ (nm) | a* | b* | c* |
|---|---|---|---|
| 50 | -7.89 | -12.40 | 14.44 |
| 60 | -5.62 | -6.58 | 8.65 |
| 70 | -5.03 | 0.31 | 5.07 |
| 80 | -5.98 | 9.42 | 11.16 |
| 90 | -5.96 | 22.05 | 22.84 |
| 100 | 1.91 | 23.14 | 23.22 |
| 110 | 18.31 | 3.78 | 18.70 |
| 120 | 31.79 | -19.92 | 37.52 |
| 130 | 28.93 | -35.55 | 45.83 |
| 140 | 6.89 | -38.75 | 39.36 |
| 150 | -17.83 | -31.44 | 36.14 |
| 160 | -29.40 | -18.38 | 34.67 |
| 170 | -29.67 | -3.00 | 29.82 |
| 180 | -24.85 | 11.29 | 27.29 |
| 190 | -16.58 | 19.05 | 25.25 |
| 200 | -4.68 | 15.89 | 16.56 |
| 210 | 8.97 | 5.24 | 10.39 |
| 220 | 21.18 | -6.67 | 22.21 |
| 230 | 28.90 | 16.36 | 33.21 |
| 240 | 28.94 | -22.15 | 36.44 |
| 250 | 19.04 | -22.81 | 29.71 |
| 260 | 0.56 | -18.30 | 18.31 |
| 270 | -19.95 | -10.33 | 22.47 |
| 280 | -33.30 | -2.40 | 33.39 |
| 290 | -34.08 | 1.80 | 34.13 |
| 300 | -24.78 | 1.53 | 24.83 |

Within Example 3-10 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 19.

(Example 3-11)

In Example 3-11, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising $Y_2O_3$ (thickness: 40 nm), and a photocatalytic functional layer 8 comprising $TiO_2$ and a hydrophilic functional layer 9 comprising $SiO_2$ (thickness: 20 nm) were stacked on this order, wherein the thickness of the photocatalytic functional layer 8 comprising $TiO_2$ was varied from 50 nm to 300 nm at intervals of every 10 nm. Table 20 shows relation among the thickness of the $TiO_2$, the a* value, the b* value, and the c* value.

26

Table 20 a*value, b* value and c* value of Substrate(Glass)/Cr;100 nm/Y$_2$O$_3$;40 nm/TiO$_2$ ; 50-300 nm/SiO$_2$ ; 20 nm

| Thickness of TiO$_2$ (nm) | a* | b* | c* |
|---|---|---|---|
| 50 | -5.53 | -7.73 | 9.50 |
| 60 | -4.56 | -2.59 | 5.24 |
| 70 | -4.92 | 4.68 | 6.79 |
| 80 | -6.01 | 16.23 | 17.31 |
| 90 | -2.49 | 24.22 | 24.35 |
| 100 | 10.69 | 12.61 | 16.53 |
| 110 | 26.20 | -10.63 | 28.27 |
| 120 | 29.96 | -29.34 | 41.93 |
| 130 | 14.19 | -36.75 | 39.39 |
| 140 | -10.52 | 32.81 | 34.46 |
| 150 | -25.53 | -21.98 | 33.69 |
| 160 | -28.11 | -8.02 | 29.23 |
| 170 | -24.85 | 6.37 | 25.65 |
| 180 | -18.65 | 16.94 | 25.19 |
| 190 | -8.93 | 18.09 | 20.17 |
| 200 | 3.63 | 9.83 | 10.48 |
| 210 | 16.12 | -1.82 | 16.22 |
| 220 | 25.41 | -12.30 | 28.23 |
| 230 | 28.37 | -19.52 | 34.44 |
| 240 | 22.27 | -22.12 | 31.39 |
| 250 | 6.94 | -19.46 | 20.66 |
| 260 | -12.90 | -12.64 | 18.06 |
| 270 | -28.83 | -4.37 | 29.16 |
| 280 | -33.75 | 1.46 | 33.78 |
| 290 | -27.53 | 2.76 | 27.67 |
| 300 | -15.48 | 0.58 | 15.49 |

Within Example 3-11 according to the present invention were samples having the thickness of TiO$_2$ corresponding to sample where both the a* value and the b* value were ranging from 25 to -25, (preferably from 20 to -20) and where the c* value was not more than 35 (preferably not more than 30) in Table 20.

(Example 3-12)

In Example 3-12, an anti-fog mirror 4 was composed of a substrate 5 made of glass (see FIG. 4), having a metal-made reflecting film 6 made of Cr (thickness: 100 nm) provided thereon, on which a reflectance regulating layer 10 comprising Y$_2$O$_3$ (thickness: 50 nm), and a photocatalytic functional layer 8 comprising TiO$_2$ and a hydrophilic functional layer 9 comprising SiO$_2$ (thickness: 20 nm) were stacked on this order, wherein the thickness of the photocatalytic functional layer 8 comprising TiO$_2$ was varied from 50 nm to 300 nm at intervals of every 10 nm. Table 21 shows relation among the thickness of the TiO$_2$, the a* value, the b* value, and the c* value.

Table 21 a*value, b* value and c* value of Substrate(Glass)/Cr;100 nm/$Y_2O_3$;50 nm/$TiO_2$;50-300 nm/$SiO_2$;20 nm

| Thickness of $TiO_2$ (nm) | a* | b* | c* |
|---|---|---|---|
| 50 | -4.41 | -3.99 | 5.95 |
| 60 | -4.26 | 1.67 | 4.58 |
| 70 | -5.41 | 11.15 | 12.39 |
| 80 | -5.06 | 22.74 | 23.30 |
| 90 | 3.69 | 20.73 | 21.06 |
| 100 | 19.45 | 0.26 | 19.45 |
| 110 | 29.22 | -21.33 | 36.18 |
| 120 | 21.18 | -33.43 | 39.57 |
| 130 | -1.66 | -33.56 | 33.60 |
| 140 | -20.70 | -25.14 | 32.57 |
| 150 | -26.67 | -12.57 | 29.48 |
| 60 | -25.02 | 1.60 | 25.07 |
| 170 | -20.42 | 14.18 | 24.86 |
| 180 | -12.81 | 19.72 | 23.52 |
| 190 | -1.68 | 14.84 | 14.93 |
| 200 | 10.84 | 3.88 | 11.51 |
| 210 | 21.49 | -7.36 | 22.72 |
| 220 | 27.18 | -16.00 | 31.54 |
| 230 | 24.89 | -20.52 | 32.26 |
| 240 | 13.16 | -19.89 | 23.85 |
| 250 | -5.28 | -14.47 | 15.40 |
| 260 | -23.18 | -6.36 | 24.04 |
| 270 | -32.44 | 0.89 | 32.45 |
| 280 | -30.05 | 4.03 | 30.32 |
| 290 | -19.76 | 2.93 | 19.98 |
| 300 | -7.22 | 0.36 | 7.23 |

Within Example 3-11 according to the present invention were samples having the thickness of $TiO_2$ corresponding to sample where both the a* value and the b* value were ranging from 25 to -25, (preferably from 20 to -20) and where the c* value was not more than 35 (preferably not more than 30) in Table 21.

The anti-fog mirror according to the present invention described above may be composed so that the reflection color exhibits a neutral color tone or a color tone near colorless (within or near colorless color tone region in the a* value and the b* value in the L*a*b* colorimetric system diagram), as described in Example 1 where the composite functional layer 7 is formed on the metal-made reflecting film 6, the composite functional layer 7 is composed of $TiO_2$ serving as the photocatalytic function and the hydrophilic functional layer, and the thickness of the composite functional layer 7 is within the range of from 50 to 300 nm (see FIG. 1) ; Example 2 where the composite functional layer is composed of the photocatalytic functional layer 8 and the hydrophilic functional layer 9, and the thickness of the former is within the range of from 50 to 300 nm and the thickness of the later is 20 nm (see FIG. 2); and Example 3 where the reflectance regulating layer 10 is formed between the metal-made reflecting film 6 and the composite functional layer 7 in Example 2 (see FIG. 4). Examples of the anti-fog mirror according to the present invention could prevent the generation of double images in human eyes. Consequently, in the anti-fog mirror according to the present invention, the reflection color exhibits neutral color by suitably setting the film thickness of the composite functional layer 7, and the generation of double images in human eyes can be prevented by suitably setting the distance between the metal-made reflecting film 6 and the mirror surface (the composite functional layer 7), i.e., the total of the film thickness of the composite functional layer 7 (the film thickness of the photocatalytic functional layer 8 and the film thickness of the hydrophilic functional layer 9) and the film thickness of the reflectance regulating layer 10.

Next, samples of the anti-fog mirror 4 according to Example 3-2 was used to produce products (Examples A, B, and C) each having a configuration as follows, and they were tested for a photocatalytic performance and an adhesion property.

Table 22

| Ex. | Hydrophilic functional Layer | Photocatalytic functional layer | Reflectance Regulating Layer | Metal-made Reflecting Film | Substrate |
|---|---|---|---|---|---|
| A | $SiO_2$ 20 nm Thick | $TiO_2$ 70 nm Thick | $Ta_2O_5$ 40 nm Thick | Cr 70nm Thick | Glass |
| B | $SiO_2$ 20 nm Thick | $TiO_2$ 60 nm Thick | $Ta_2O_5$ 40 nm Thick | Cr 70 nm Thick | Glass |
| C | $SiO_2$, 20 nm Thick | $TiO_2$ 300 nm Thick | $Ta_2O_5$ 40 nm Thick | Cr 70 nm Thick | Glass |

(Evaluation of Photocatalytic Performance)

The photocatalytic performance was evaluated by dropwise-adding engine oil to each of samples of Examples A, B, and C shown in Table 22, irradiating each of the samples with a ultraviolet beam at an intensity of 1.0 mW/cm$^2$, then dropwise adding water to each of these samples, and measuring a contact angle of the water. The results are shown in Table 23.

Table 23

| Ex. [1] | Contact Angle(°) Water of Droplet Immediately after application of Engine Oil | Contact Angle(°) of Water Droplet Immediately after Irradiation of UV Beam | |
|---|---|---|---|
| | | Irradiation Period 1 hr. | Irradiation Period 4 hrs. |
| A | 60 | 15 | 2 |
| B | 55 | 10 | 3 |
| C | 75 | 10 | 2 |
| 1) See Table 22 | | | |

As shown in Table 23, the contact angle of the water droplet immediately after the application of the engine oil in each of the samples of Examples A, B, and C was as large as 55 to 75°, and the hydrophilicity (wettability) in the hydrophilic functional layer formed on the surface was decreased. However, 1 hour after the irradiation of the ultraviolet beam, the contact angle of the water droplet was decreased to 10-15°. Furthermore, 4 hours after the irradiation of the ultraviolet beam, the contact angle of the water droplet became considerably low, which was not more than 5°, indicating that the hydrophilicity is considerably enhanced. This clarifies that in the anti-fog mirrors of Examples A, B, and C according to the present invention, a sufficient effect for enhancing the hydrophilicity can be exhibited by the photocatalytic function of the photocatalytic functional layer.

(Evaluation of Adhesion Property)

Next, these samples of Examples A, B, and C were tested for a boiling test where they were immersed with tapped water, followed by boiling. After the test, the adhesion between the film and the substrate (glass) was evaluated by conducting an evaluation of an outward appearance of each of the samples. Also, each of the samples, which had undergone the boiling test described above, was irradiated with a ultraviolet beam at an intensity of 1.0 mW/cm$^2$ for 24 hours, the water droplet was added thereto, and then the contact angle of the water droplet was measured to evaluate the hydrophilic performance. The results are shown in Table 24.

Table 24 Adhesion of Film and Hydrophilicity After Boiling Test

| EXAMPLE[1] | Situation of Film After Boiling Test | Contact Angle (°) of Water Droplet After Irradiation with UV beam for 24 hours After Boiling Test |
|---|---|---|
| A | Good Adhesion | 6 |
| B | Good Adhesion | 6 |
| C | Good Adhesion | 7 |
| 1) See Table 22 | | |

As shown in Table 24, no delamination of films ($SiO_2$ and $TiO_2$) could been seen in all of samples of Examples A, B, and C according to the present invention even after the boiling test using tap water. This indicates that the adhesion between the film and the substrate (glass) is very good. When the ultraviolet beam was irradiated for 24 hours after the boiling test, after which water droplet was added to each of the samples, the contact angle was confirmed to be not more than 10°.

When water droplet was added to each of the samples, the contact angle was measured before the irradiation of the ultraviolet beam, the contact angle in each sample was not less than 20°, indicating that the hydrophilicity before irradiation of the ultraviolet beam was inferior to that after the irradiation of the ultraviolet. Consequently, it can be clarified that all of the samples of Examples A, B, and C according to the present invention are excelling in adhesion between the film and the substrate and their hydrophilic functions can be enhanced by the irradiation of the ultraviolet.

As described above, the anti-fog mirrors of Examples 1, Example 2, and Example 3, having configurations of the first embodiment, the second embodiment, and the fourth embodiment, respectively have been described. The present invention is not restricted thereto. The anti-fog mirror having a configuration of the third embodiment also has the same effects as those in the working examples.

## Claims

1. An anti-fog mirror possessing a substrate having a metal-made reflecting layer, a composite functional layer with a photocatalytic function and a hydrophilic function provided on the surface of the substrate on this order, the film thickness of said composite functional layer being set so that an a* value and a b* value in an L*a*b* colorimetric system diagram are both ranging from 25 to -25.

2. An anti-fog mirror possessing a substrate having a metal-made reflecting layer, a composite functional layer with a photocatalytic function and a hydrophilic function provided on the surface of the substrate on this order, the film thickness of said composite functional layer being set so that a c* value in an L*a*b* colorimetric system diagram represented by the following formula (1):

$$Chroma(c*) = \sqrt{(a*)^2 + (b*)^2} \qquad (1)$$

is set to be not more than 35.

3. The anti-fog mirror according to Claim 1, wherein said composite functional layer comprises a photocatalytic functional layer having the hydrophilic functional layer stacked thereon.

4. The anti-fog mirror according to Claim 3, which further comprises a reflectance regulating layer comprising a substance having a reflectance lower than that of the composite functional layer provided between said metal-made reflecting film and said composite functional layer.

5. The anti-fog mirror according to Claim 3, wherein said hydrophilic functional layer comprises $SiO_2$ as a main component.

6. The anti-fog mirror according to Claim 3, wherein said photocatalytic functional layer comprises $TiO_2$ as a main component.

7. The anti-fog mirror according to Claim 1, wherein said metal-made reflecting layer is composed of at least one member selected from the group consisting of Cr, Cr-Rh alloys, Al, Rh, Ti-Rh alloys, and Ag.

8. The anti-fog mirror according to Claim 4, wherein said reflectance regulating layer provided between said metal-made reflecting film and said composite functional layer comprises at least one member selected from the group consisting of $Ta_2O_5$, $ZrO_2$, $SnO_2$, $In_2O_3$, SiO, ZnO. $Al_2O_3$, ITO, $Y_2O_3$, MgO, $WO_3$, $ZrO_2$, and $TiO_2$.

9. The anti-fog mirror according to any one of Claims 1 to 8, which is constructed as an automobile exterior mirror.

10. The anti-fog mirror according to any one of Claims 1 to 8, which is constructed as a dental mirror.

FIG. 1

FIG. 2

FIG. 3

FIG. 4

FIG. 5

(Prior Art)

(Front Side)

SiO2 Film

TiO2 Film

Reflecting Film

Glass Substrate

# FIG. 6A

Spectral Reflectance Characteristics of TiO$_2$ (70 nm) on Cr Mirror

a* -11.75

b* -24.50

Color Tone: Blue

# FIG. 6B

Spectral Reflectance Characteristics of TiO₂ (120 nm) on Cr Mirror

a* -7.57

b* - 37.46

Color Tone: Yellow

## FIG. 6C

Spectral Reflectance Characteristics of TiO₂ (140 nm) on Cr Mirror

a*   26.53

b*   3.16

Color Tone: Red

**INTERNATIONAL SEARCH REPORT**

| | International application No. |
|---|---|
| | PCT/JP2004/005925 |

A. CLASSIFICATION OF SUBJECT MATTER
  Int.Cl⁷ A47G1/00

According to International Patent Classification (IPC) or to both national classification and IPC

B. FIELDS SEARCHED

Minimum documentation searched (classification system followed by classification symbols)
  Int.Cl⁷ A47G1/00

Documentation searched other than minimum documentation to the extent that such documents are included in the fields searched
  Jitsuyo Shinan Koho        1922–1996   Jitsuyo Shinan Toroku Koho   1996–2004
  Kokai Jitsuyo Shinan Koho  1971–2004   Toroku Jitsuyo Shinan Koho   1994–2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-141916 A (Murakami Corp.),<br>25 May, 2001 (25.05.01),<br>Full text; Figs. 1 to 15<br>& EP 1099671 A1        & US 6425670 B1 | 1-10 |
| Y | JP 4-285034 A (Tokai Rika Co., Ltd.),<br>09 October, 1992 (09.10.92),<br>Page 2, column 2, lines 14 to 42; Figs. 1 to 6<br>(Family: none) | 1-10 |
| Y | JP 62-108207 A (Tokai Rika Co., Ltd.),<br>19 May, 1987 (19.05.87),<br>Page 2, upper right column, line 10 to lower<br>left column, line 8; Figs. 1 to 7<br>(Family: none) | 4-10 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  03 August, 2004 (03.08.04) | Date of mailing of the international search report<br>  17 August, 2004 (17.08.04) |
|---|---|
| Name and mailing address of the ISA/<br>  Japanese Patent Office | Authorized officer |
| Facsimile No. | Telephone No. |

Form PCT/ISA/210 (second sheet) (January 2004)

EP 1 623 657 A1

INTERNATIONAL SEARCH REPORT

International application No.

PCT/JP2004/005925

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2001-245765 A  (Toto Ltd.),<br>11 September, 2001 (11.09.01),<br>Page 3, column 4, lines 44 to 49; Figs. 1 to 5<br>(Family: none) | 10 |
| A | JP 10-36144 A  (Murakami Corp.),<br>10 February, 1998 (10.02.98),<br>Full text; Figs. 1 to 14<br>& EP 820967 A1         & US 5854708 A1 | 1-10 |

Form PCT/ISA/210 (continuation of second sheet) (January 2004)

39